## Europäisches Patentamt

## European Patent Office

## Office européen des brevets

(19)

(11) Publication number: **0 218 771**
**B1**

(12) # EUROPEAN PATENT SPECIFICATION

(45) Date of publication of the patent specification:
**08.08.90**

(51) Int. Cl.⁵: **E01F 9/01**, B60Q 7/00, E05D 1/02

(21) Application number: **85850324.6**

(22) Date of filing: **15.10.85**

(54) Marker.

(43) Date of publication of application:
**22.04.87 Bulletin 87/17**

(45) Publication of the grant of the patent:
**08.08.90 Bulletin 90/32**

(84) Designated Contracting States:
**AT BE CH DE FR GB IT LI LU NL SE**

(56) References cited:
EP-A- 0 137 628
DE-A- 3 124 339
DE-C- 305 733
FR-A- 486 448
FR-A- 2 127 602
FR-A- 2 213 720
GB-A- 961 401
GB-A- 1 267 189
GB-A- 1 362 523
NL-A- 6 700 245
US-A- 1 559 999
US-A- 2 219 524
US-A- 2 483 734
US-A- 2 667 000
US-A- 3 191 218
US-A- 3 772 811
US-A- 4 462 145

(73) Proprietor: **SWEDISH TRANSFER LTD, Ninety South Mall, Cork(IE)**

(72) Inventor: **Jacobsson, Björn, Diskusvägen 7, S-517 00 Bollebygd(SE)**

(74) Representative: **Ström, Tore et al, Ström & Gulliksson AB Studentgatan 1 P.O. Box 4188, S-203 13 Malmö(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a marker, comprising a trilateral hollow pyramid having an open base, the sides of the pyramid each consisting of a rigid triangular plastic panel, the side edges of one of said panels being connected by hinges each to one side edge of the other two of said panels, whereby means releasably interconnect said latter panels at the other side edges thereof.

The marker of the invention is intended for use as a traffic sign on streets, roads and open places in order to define an area from which traffic should be excluded for one reason or the other. It is also intended to be used as a sign indicating danger or other conditions that should be observed by the public, or indicating a route to be followed by the participants of sport contests and similar events.

From US-4 462 145 there is known a prior art marker intended for a similar use. Said marker comprises three rigid triangular plastic panels hinged together in an angular relationship. At least two of the panels are releasably interconnected.

The purpose of the invention is to provide a marker which can be easily handled and can be easily adapted to the intended use thereof and which can be stored in a compact condition so that a number of markers can be carried in a car without requiring a lot of space there in.

According to the invention, the related purpose is achieved by providing a marker of the kind referred to which is characterized by the features of claim 1.

In order to illustrate the invention an embodiment of the marker according to the invention will be described in more detail below, reference being made to the accompanying drawings in which

FIG. 1 is a plan view of the marker in an unfolded flat condition,

FIG. 2 is a fragmentary side view of two adjacent panels of the marker with a hinge mounted therebetween,

FIG. 3 is a perspective view of a hinge element,

FIG. 4 is a cross-sectional view of a hinge element mounted to two adjacent panels,

FIG. 5 is a plan view of the marker folded up for storage,

FIG. 6 is a perspective view of a marker in the operative condition,

FIG. 7 is a perspective view of a connection strap,

FIG. 8 is a fragmentary side view of two adjacent panels of the marker interconnected by the connecting strip of FIG. 7, and

FIG. 9 is a perspective view of the marker mounted to a tripod stand on the top thereof.

The marker shown in the drawings comprises three identical triangular panels, a central panel 10 and two side panels 11 and 12, which are made of a rigid plastic material such as polypropylene, in a suitable colour. Each panel has a base edge 13 and two side edges 14 and 15, and pieces 16 of a light-reflecting material is attached to one or both sides thereof. Also a suitable text 16', FIGS. 6 and 9, of a light-reflecting material can be arranged on the panels.

The apex between the side edges 14 and 15 of each panel is cut off at 17, and at this apex each panel has an aperture 18.

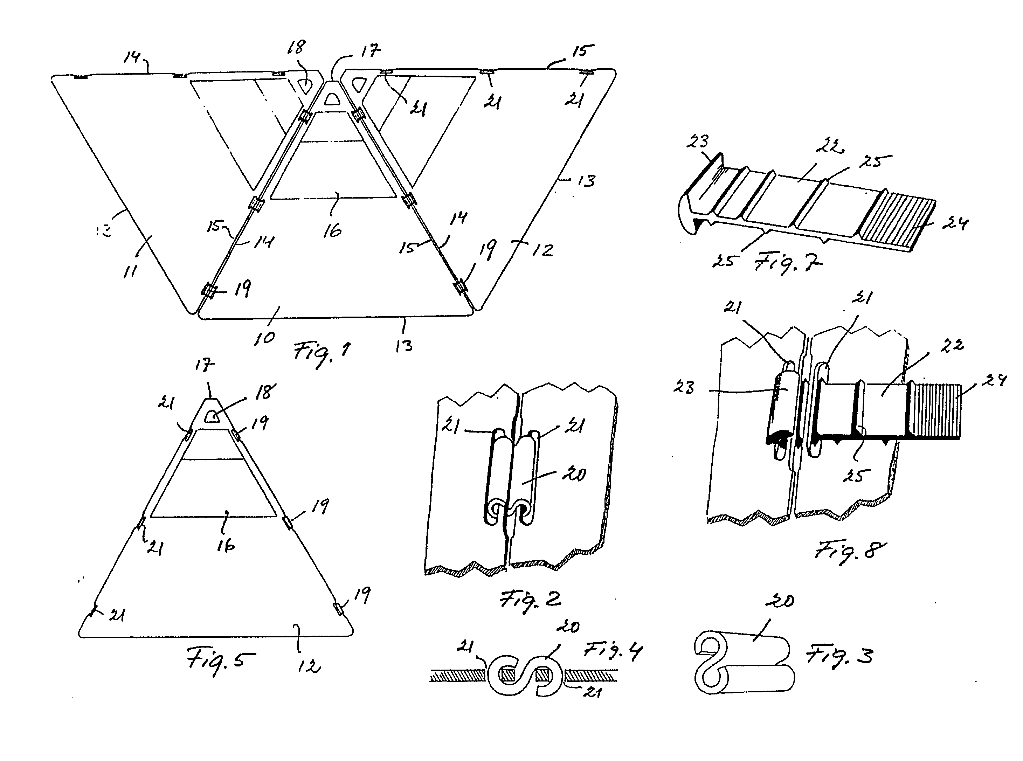

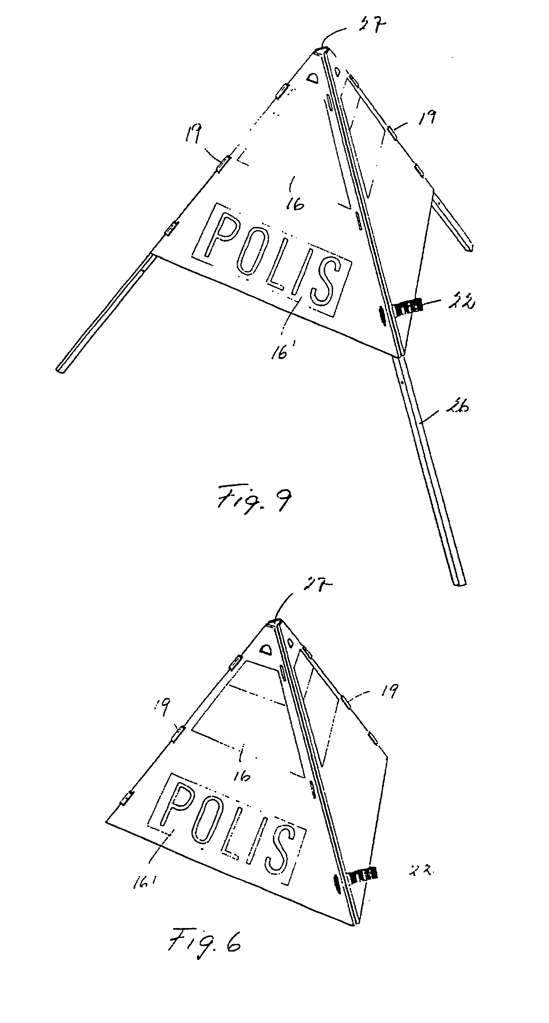

At the side edges 14 and 15, the central panel 10 is jointed to the adjacent side edges 14 and 15 of the side panels 11 and 12 by means of hinges 19. These hinges can comprise a thin web of the same plastic material as that from which the panels are made, said web being integral with the panels jointed by the hinge, but it is preferred to arrange the hinge as is shown in FIGS. 2 to 4. The hinge shown therein comprises an S-shaped element 20 of strip material, which is engaged with slots 21 in the panels to be jointed, said slots extending along the adjacent edges. A hinge of this type provides the advantage over the web connection mentioned above, that the jointed panels can be easily disconnected should it be necessary for one reason or the other to replace a panel.

For storage of the marker this can be folded up by folding the side panel 11 against one side of the central panel 10 and the side panel 12 against the other side of the central panel 10 such that the marker will appear as disclosed in FIG. 5. In this folded up condition, the marker can easily be stored and requires a small space only, and it is also possible to hang up one or several markers on a hook or other suspension means by passing such hook or means through the apertures 18 in the three panels registering with each other.

When the marker is to be used it is folded to form a trilateral hollow pyramid as shown in FIG. 6. In order to maintain the marker in the pyramid shape a connection means for interconnecting the free edges 14 and 15 of the side panels 11 and 12 is provided. In the embodiment shown, such means comprises a strap 22, FIGS. 7 and 8, of a flexible and elastic rubber or plastic material, which forms a head 23 at one end thereof and a grooved tab 24 at the other end thereof. On opposite sides of the strap there are formed mutually spaced cross ribs 25, the ribs on one side of the strap being displaced longitudinally in relation to the ribs on the other side of the strap. The strap is passed through a slot 21 in one of the side panels such that the head 23 engages one side of the panel, the head being too large to pass through the slot, and when the marker has been folded to form the pyramid the strap is passed through the corresponding slot 21 in the other side panel and is pulled tight by gripping the strap at the tab 24. Then, it is possible to draw the adjacent edges tightly together and to lock the strap in the tightened position by one cross rib or the other engaging the edge of the slot in said other side panel. The pyramid obtained will be very sturdy and rigid and can be positioned on the ground resting at the base edges 13, but it is also possible to mount the pyramid as a cap on top of a tripod 26 as is shown in FIG. 9. Preferably, the legs of the tripod are adjustable as to the length thereof.

Due to the cut off of each panel at 17 there is a through opening 27 in the top of the pyramid, and a stick or bar can be passed through this opening and be driven down into the ground, and it is also possible to use the opening for mounting a lantern to the top of the pyramid.

It should be noticed that the pyramid can be formed with either of the two sides of the panels facing outwards, which means that two different decorations of the marker can be obtained if the decoration of one side of each panel is different from the decoration of the other side of the panel. Thus, the appearance of the marker can be adapted to two different purposes of use.

## Claims

1. Marker comprising a trilateral hollow pyramid having an open base, the sides (10, 11, 12) of the pyramid each consisting of a rigid triangular plastic panel, the side edges (14, 15) of one of said panels (10) being connected by hinges (19) each to one side edge of the other two of said panels (11, 12), whereby means releasably interconnect said latter panels at the other side edges thereof characterized in that the sides (10, 11, 12) of the pyramid are identical, each of said sides (10, 11, 12) being provided with slots (21) extending along at least two of the edges thereof, that the hinges (19) between the panels (10, 11, 12) comprise S-shaped links (20) received by said slots (21) in the panels, extending along the edges thereof, and that said connecting means comprises an elastic strap (22) having a head portion (23) at one end thereof and cross ribs (25) mutually spaced longitudinally of the strap, said strap being passed through slots (21) in the panels, extending along said other edges.

2. Marker as claimed in claim 1 wherein light-reflecting material (16, 16') is provided on the outside surface of at least one of said panels (10, 11, 12).

3. Marker as claimed in claim 1 or 2 wherein each panel (10, 11, 12) at the top apex thereof forms an aperture (18).

4. Marker as claimed in any of claims 1 to 3 wherein the pyramid is truncated to form at the top thereof an opening for the passage of a stick, for mounting a lantern or for similar purposes.

5. Marker as claimed in any of claims 1 to 4 further comprising a tripod stand the upper portion of which is received inside the marker which forms a cap on top of the tripod stand.

## Patentansprüche

1. Markierung mit einer dreiseitigen hohlen Pyramide mit offener Basis, wobei die Seiten (10, 11, 12) der Pyramide jeweils ein starres dreieckiges Plastikpaneel aufweisen, und die Seitenkanten (14, 15) eines der Paneele (10) mit Gelenken (19) jeweils mit einer Seitenkante der beiden anderen Paneele zwischen den anderen Seitenkanten der beiden anderen Paneele vorhanden sind, dadurch gekennzeichnet, daß die Seiten (10, 11, 12) der Pyramide identisch sind, jede der Seiten (10, 11, 12) Schlitze (21) aufweist, die sich entlang wenigstens zwei der Kanten erstrecken, daß die Gelenke (19) zwischen den Paneelen (10, 11, 12) s-förmige Verbindungsteile (20) aufweisen, welche in den Schlitzen (21) in den Paneelen aufgenommen sind und sich entlang deren Kanten erstrecken, und daß diese Verbindungsmittel ein elastisches Band (22) umfassen, welches ein Kopfteil (23) am einen Ende und in Längsrichtung des Bandes zueinander beabstandete Querrippen (25) aufweist, wobei das Band durch die Schlitze (21) in den Paneelen verläuft und sich entlang der anderen Kanten erstreckt.

2. Markierung nach Anspruch 1, wobei auf den Außenflächen wenigstens eines Paneeles (10, 11, 12) lichtreflektierendes Material (16, 16') vorgesehen ist.

3. Markierung nach Anspruch 1 oder 2, wobei jedes Paneel (10, 11, 12) an der Spitze eine Öffnung (18) bildet.

4. Markierung nach einem der Ansprüche 1 bis 3, wobei die Pyramide abgeschnitten ist, um an der Spitze eine Öffnung für das Hindurchtreten eines Stabes zu bilden, um eine Laterne daran zu befestigen oder für einen ähnlichen Zweck.

5. Markierung nach einem der Ansprüche 1 bis 4 mit einem dreibeinigen Ständer, dessen oberer Teil innerhalb der Markierung liegt, welche oben am dreibeinigen Ständer eine Abdeckung bildet.

## Revendications

1. Panneau de signalisation comprenant une pyramide creuse trilatérale présentant une base ouverte, les côtés (10, 11, 12) de la pyramide étant, chacun, constitués d'un panneau en plastique triangulaire rigide, les bords latéraux (14, 15) d'un desdits panneaux (10) étant raccordés par des charnières (19), chacune étant située sur un bord latéral des deux autres dits panneaux (11, 12), de manière que des moyens relient de manière démontable lesdits derniers panneaux aux autres bords latéraux, caractérisé en ce que les côtés (10, 11, 12) de la pyramide sont identiques, chacun desdits côtés (10, 11, 12) étant pourvu de fentes (21) s'étendant sur au moins deux des bords de ceux-ci, en ce que les charnières (19) situées entre les panneaux (10, 11, 12) comprennent des articulations (20) en forme de S logées dans lesdites fentes (21) situées dans les panneaux, s'étendant sur les bords, et en ce que les moyens de raccordement comprennent une bande élastique (22) présentant une portion de tête (23) sur une de ses extrémités et des nervures transversales (25) espacées entre elles longitudinalement par rapport à la bande, ladite bande passant par les fentes (21) des panneaux, s'étendant sur lesdits autres bords.

2. Panneau de signalisation selon la revendication 1, dans lequel le matériau réfléchissant la lumière (16, 16') est prévu sur la surface extérieure d'au moins un desdits panneaux (10, 11, 12).

3. Panneau de signalisation selon la revendication 1 ou 2, dans lequel chaque panneau (10, 11, 12) forme une ouverture (18) à son sommet supérieur.

4. Panneau de signalisation selon une quelconque des revendications 1 à 3, dans lequel la pyramide est tronquée pour former à son sommet une ouverture pour le passage d'une tige, servant à monter une lanterne ou dans des buts analogues.

5. Panneau de signalisation selon une quelconque des revendications 1 à 4 comprenant en outre un support tripode dont la partie supérieure est logée à l'intérieur du panneau de signalisation qui forme un capuchon au sommet du support tripode.

EP 0 218 771 B1

Fig. 9

Fig. 6